Europäisches Patentamt

European Patent Office

Office européen des brevets

(19)

(11) **EP 1 388 460 A2**

## (12) DEMANDE DE BREVET EUROPEEN

(43) Date de publication:
**11.02.2004 Bulletin 2004/07**

(51) Int Cl.⁷: **B60Q 1/08**, B60Q 1/115

(21) Numéro de dépôt: 03291839.3

(22) Date de dépôt: **24.07.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **05.08.2002 FR 0209966**

(71) Demandeur: **VALEO VISION**
**93012 Bobigny Cédex (FR)**

(72) Inventeurs:
• **Le Bars, Jean-François**
**75012 Paris (FR)**
• **Phan van Ho, Robert**
**93350 Le Bourget (FR)**
• **Toulisse, Ludovic**
**93700 Drancy (FR)**

(54) **Dispositif de réglage automatique de la position des projecteurs de véhicule automobile**

(57) L'invention a pour objet un dispositif de réglage automatique de la position d'au moins un projecteur (1, 1') de véhicule automobile (2) par rapport à la carrosserie par pivotement autour d'au moins un axe (X) sensiblement parallèle au chemin de roulement, ledit dispositif comprenant au moins un actionneur (3, 3') apte à faire pivoter ledit (lesdits) projecteur(s) (1), au moins un capteur (4, 4') solidaire du véhicule (2), et notamment fixé au châssis à proximité d'une des roues du véhicule, au moins un système électronique de commande (5, 5') de l'actionneur (3) à l'aide des informations provenant du(des) capteur(s) (4, 4'). Ledit système électronique de commande (5), ou tout au moins l'essentiel de ses composants, est fixé à ou implanté dans l'actionneur (3).

FIG.1

EP 1 388 460 A2

**Description**

La présente invention a pour objet un dispositif de réglage automatique de la position des projecteurs de véhicule automobile.

Il est en connu d'équiper les véhicules de tels dispositifs, dont le but est de corriger automatiquement la position du projecteur par rapport à la carrosserie de façon à éviter tout éblouissement des conducteurs de véhicules roulant en sens inverse : les projecteurs étant liés de manière rigide au véhicule, l'état de charge de celui-ci se traduit par une remontée de la coupure du faisceau lumineux émis par les projecteurs (la « coupure » étant la limite entre la zone éclairée et la zone non éclairée par le projecteur à l'avant du véhicule). Cette remontée du faisceau lumineux crée un risque d'éblouissement des conducteurs en sens inverse. Le dispositif de réglage évoqué plus haut permet de corriger automatiquement l'assiette des projecteurs à partir d'informations données par des capteurs disposés de façon appropriée sur le châssis du véhicule, de manière à rendre la coupure du faisceau lumineux aussi stable que possible, quelle que soit la charge du véhicule.

Le brevet FR-2 365 461 décrit un exemple de dispositif de réglage de ce type, qui comprend une boucle de commande utilisant des capteurs, un organe de commande comprenant un calculateur et un moteur apte à orienter le projecteur. Ce dispositif donne entière satisfaction, en termes de fiabilité, de performance, de fiabilité.

Cependant, il existe un besoin pour un dispositif de réglage différent, qui puisse notamment offrir un mode de fonctionnement plus simple, et/ou qui soit plus compact, et/ou qui apporte des fonctionnalités supplémentaires ou encore qui soit plus facile, moins complexe à fabriquer.

L'invention a donc pour but de mettre au point un tel dispositif de réglage amélioré.

L'invention a tout d'abord pour objet un dispositif de réglage automatique de la position d'au moins un projecteur de véhicule automobile par rapport à la carrosserie par pivotement autour d'au moins un axe sensiblement parallèle au chemin de roulement. Le dispositif comprend au moins un actionneur apte à faire pivoter ledit (lesdits) projecteur(s), au moins un capteur solidaire du véhicule, et notamment fixé au châssis à proximité d'une des roues du véhicule, au moins un système électronique de commande de l'actionneur à l'aide des informations provenant du(des) capteur(s). Selon l'invention, l'essentiel du système électronique de commande est fixé à ou implanté dans l'actionneur. On comprend par l' « essentiel » de l'électronique le fait que tout ou quasiment tous ses composants sont effectivement fixés à ou implantés dans l'actionneur. Cependant, l'invention prévoit aussi que des composants simples et/ou en nombre réduit puissent être hors de l'actionneur, notamment sur le faisceau électrique du véhicule, du type résistances.

L'invention a également pour objet le procédé de montage et d'initialisation d'un tel dispositif dans un véhicule, le procédé de mise en oeuvre dudit dispositif une fois monté dans le véhicule. L'invention a également pour objet le véhicule muni d'un tel dispositif.

Solidariser le système électronique à l'actionneur est très avantageux. En effet, jusque là, le système électronique était généralement disposé ailleurs dans le véhicule, notamment fixé au châssis à proximité de l'un des capteurs ou au niveau du tableau de bord. Ces emplacements nécessitent beaucoup de câblage et de moyens assurant l'étanchéité du système. Placer le système électronique dans l'actionneur, au contraire, offre une solution nettement plus économe en câblage, un dispositif de réglage plus compact, un montage du dispositif dans le véhicule facilité. Si l'on dispose en plus l'électronique complètement à l'intérieur du boîtier de l'actionneur, l'essentiel de son étanchéité est déjà assuré par le boîtier de l'actionneur.

De préférence, le dispositif selon l'invention comprend au moins deux capteurs dont un à l'avant du véhicule et un à l'arrière du véhicule.

Selon une première variante de l'invention, le dispositif selon l'invention comprend un seul système électronique de commande (maître) pour régler les deux projecteurs du véhicule, avec un actionneur par projecteur, ledit système étant associé à l'un des deux actionneurs. Dans cette configuration, l'autre actionneur n'a pas d'électronique maître, il peut cependant contenir des moyens électroniques « esclaves », du type carte électronique simplifiée pour relayer l'électronique maître associé à l'autre actionneur. L'avantage de cette variante est d'avoir globalement moins d'électronique dans la chaîne du système de réglage des deux projecteurs.

Selon une seconde variante de l'invention, le dispositif selon l'invention comprend un système électronique de commande associé à un actionneur par projecteur. L'avantage de cette seconde variante est que tous les actionneurs équipant le véhicule, et l'électronique qui y est associée, peuvent être rigoureusement identiques.

Avantageusement selon l'invention, le(s) système(s) électronique(s) de commande est (sont) amovible(s) par rapport à l'actionneur auquel il(s) est (sont) fixé(s) ou dans lequel il(s) est (sont) implanté(s). On peut ainsi échanger/ réparer l'électronique de l'actionneur aisément.

De préférence, le système électronique selon l'invention est sous forme d'une carte électronique. C'est aussi de préférence le cas des électroniques « esclaves » précédemment mentionnées.

Selon un premier mode de réalisation, le(s) système(s) électronique(s) de commande selon l'invention est (sont) de type numérique. Il comprend avantageusement au moins un calculateur. C'est une électronique éprouvée et connue.

Selon un second mode de réalisation, le(s) système(s) électronique(s) de commande est (sont) de type analogique. Choisir une électronique reposant pour l'essentiel voire intégralement sur de l'analogique est extrêmement intéressant : l'invention dans ce mode de réalisation se permet de supprimer l'utilisation de microcontrôleur, pour des composants analogiques aussi simples et peu nombreux que possible : on a ainsi un dispositif de réglage d'assiette plus simple à fabriquer, plus simple à implanter dans le véhicule, plus simple à changer, sans perte de fiabilité ou de performances.

Pour parvenir à ce résultat, les inventeurs ont réécrit la loi de calcul de correction d'assiette :

- avec un système à deux capteurs à appliquer aux deux moteurs des actionneurs, la loi s'exprime de façon connue sous la forme :

$$(i) \qquad Ass = kAV ( VcaptAV - VcaptAV(0)) - kAR (VcaptAR -$$

$$VcaptAR(0))$$

Dans laquelle :

- Ass = assiette calculée du véhicule
- VcaptAV = signal issu du capteur avant
- VcaptAV(0) = signal issu du capteur avant lors de la phase de calibration (véhicule sans charge et à l'arrêt)
- VcaptAR = signal issu du capteur arrière
- VcaptAR(0) = signal issu du capteur arrière lors de la phase de calibration (véhicule sans charge et à l'arrêt)
- kAV= facteur de correction du capteur avant
- kAR= facteur de correction du capteur arrière

Les systèmes actuels de type numérique échantillonnent, codent, numérisent les valeurs CaptAV et CaptAV (O), CaptAR et CaptAR(0), puis les soustraient pour enfin les multiplier par un facteur enregistré en mémoire.

Le principe selon l'invention consiste à réécrire la loi sous la forme :

$$(ii) \qquad Ass = (kAV \times VcaptAV - kAR \times VcaptAR) - (kAV \times$$

$$VcaptAV(O) - kAR \times VcaptAR(0)).$$

Le deuxième terme de cette loi (ii) représente une valeur constante. Cette partie fixe peut être supprimée de manière analogique grâce à une réalisation électronique (dont des exemples seront détaillés plus loin) dans laquelle les gains kAV et kAR sont dans les rapports des résistances utilisées.

Lors des réglages du projecteur sur véhicule, l'opération d'initialisation consiste donc à ajuster la résistance variable de manière telle que la tension de commande du moteur de l'actionneur commande celui-ci à sa position nominale.

Toute variation ultérieure des valeurs VcaptAV et VcaptAR sera interprétée et traitée comme une variation d'assiette par rapport à la valeur d'initialisation.

Pour un système à un capteur, la loi de correction d'assiette s'écrit :

$$(iii) \qquad Ass = kAR \times VcaptAR - kAR(0) \times VcaptAR(0)$$

Le deuxième terme peut également être supprimé de manière analogique grâce à une réalisation électronique simple dont un exemple sera détaillé plus loin.

De même, lors de la phase d'initialisation, le réglage potentiométrique permet de repositionner la tension de commande du moteur dans sa plage nominale.

Des électroniques de ce type, analogiques, permettent donc d'obtenir la fonction de correction désirée de manière simple, en s'affranchissant des calculateurs.

On peut améliorer la précision avec deux résistances et inversion de l'alimentation des deux capteurs par rapport au mouvement du véhicule :

Pour la démonstration on considère que les résistances des capteurs analogiques sont égales et quelles respectent l'inégalité suivante : Rcapt « RAV, RAR. La position du véhicule se traduit par le coefficient $\alpha$AV pour le

capteur avant tel que VcaptAV= $\alpha$AV$\times$Vcc et pour le capteur arrière par VcaptAR=(1- $\alpha$Ar)$\times$Vcc dans la mesure où les référentiels de tensions sont inversés.

La tension résultante VR au point R s'écrit :

$$VR = (VcaptAV \times RAR / (RAR+RAV)) + VcaptAR \times RAV / (RAR+RAV)$$

Ou,

$$VR = (Vcc/(RAR+RAV)) \times (\alpha AV \times RAR + (1-\alpha AR) \times RAV)$$

Lors de l'initialisation, VR (0) s'écrit :

$$VR(0) = (Vcc/(RAR+RAV)) \times (\alpha AV(0) \times RAR + (1-\alpha AR(0)) \times RAV)$$

Soit,

$$VR-VR(0) = (Vcc/(RAR+RAV)) \times ((\ RAR \times \alpha AV - RAVx\ \alpha AR) - (RAR \times \alpha AV(0) - RAVx\ \alpha AR(0))$$

On retrouve ainsi la loi d'assiette Ass calculée précédemment dans laquelle kAV et kAR sont proportionnels respectivement à RAR et RAV.

Pour mettre en application ce nouveau mode de correction analogique, le système de commande électronique dans ce mode de réalisation peut comprendre avantageusement les composants suivants : au moins un intégrateur, au moins un soustracteur, au moins un suiveur. Il comprend aussi de préférence au moins un potentiomètre. Il comprend aussi de préférence des résistances, notamment deux, qui sont disposées soit avec le reste de l'électronique, soit en dehors du (des) actionneurs, notamment sur le faisceau électrique du véhicule ou même au niveau des capteurs.

Que l'électronique soit de type analogique ou numérique, il est nécessaire de procéder à une étape d'initialisation quand on monte le dispositif de réglage sur le véhicule. Avantageusement, le dispositif selon l'invention est muni de moyens d'initialisation destinés à régler le moteur de l'actionneur à sa position nominale, lesdits moyens comprenant un moyen de réglage accessible de l'extérieur du boîtier de l'actionneur et associé à un moyen d'avertissement, notamment visuel, sonore ou électrique, de l'état d'avancement de l'initialisation. Ce moyen d'avertissement est intéressant si cette opération se fait manuellement (pour avertir l'opérateur qui ajuste le moyen de réglage que l'initialisation est terminée). Il est tout aussi utile si cette opération se fait automatiquement, avec un outil qui peut alors être muni du système de commande et du capteur adapté au moyen d'avertissement retenu.

Avantageusement, le moyen d'avertissement est une source lumineuse du type diode électroluminescente. Celle-ci peut être intégrée dans le boîtier de l'actionneur et protégée par un écran transparent, notamment sous forme d'une pièce transparente surmoulée sur ledit boîtier.

Comme évoqué plus haut, le moyen de réglage peut être ajustable automatiquement par un outil de type visseuse, ledit outil répondant à un système de commande de marche arrêt utilisant un capteur, notamment un capteur optique disposé sur ledit outil, apte à détecter le signal d'avertissement de fin de réglage du moyen d'avertissement, signal qui peut consister en l'allumage de la diode électroluminescente.

Si l'on reprend le second mode de réalisation de l'invention concernant le mode de fonctionnement analogique de l'électronique, lors des réglages du projecteur sur véhicule, l'opération d'initialisation consiste donc à ajuster la résistance variable (un potentiomètre) de manière telle que la tension de commande du moteur de l'actionneur commande celui-ci à sa position nominale. Lors du réglage, la tension appliquée aux bornes de l'actionneur est comparée aux valeurs nominales minimales et maximales acceptées par l'actionneur. Quand cette valeur est dans la plage appropriée, le dispositif peut activer une diode électroluminescente (par exemple) et/ ou émettre un signal indiquant à l'opérateur que le réglage est bon.

Avantageusement, le dispositif selon l'invention a un mode de fonctionnement séquentiel.

Notamment dans le cas où l'électronique utilisée est de type analogique, le dispositif peut être ainsi équipé d'une électronique permettant d'échantillonner la correction. Lors d'une variation de la tension au niveau de la batterie, à cause du circuit de filtrage sur le signal des capteurs, la charge et décharge d'un condensateur, induisent un retard de la tension venant des capteurs. Ce retard se traduit par un changement de consigne pour le correcteur. L'électronique de commande voyant ce changement actionne donc le moteur pour converger vers la nouvelle consigne, ce qui se traduit par une alimentation du moteur à chaque fois que la tension batterie varie.

Ce problème fait donc fonctionner le correcteur, alors qu'il ne le devrait pas, la durée de vie de l'actionneur peut ainsi s'en trouver diminuée.

Pour résoudre ce problème, on ouvre une fenêtre de correction pendant quelques secondes et ceci, toutes les x minutes. Pendant l'intervalle de temps entre deux corrections, il faut que le condensateur précédemment mentionné ait terminé de se charger ou de se décharger lors d'une variation de la tension d'alimentation. Pour cela, il faudra choisir une constante de temps du filtre passe bas inférieure aux x minutes. Ainsi, la durée de vie du correcteur se trouve augmentée, le correcteur ne corrigera que toutes les x minutes, que lorsqu'il y aura une vraie variation de la consigne.

Le dispositif selon l'invention comprend avantageusement un mode de gestion des défaillances commandant à l'actionneur de rabattre le(s) projecteur(s) vers le bas. En effet, le dispositif est conçu de façon à respecter les règles de sécurité, de façon à ce que, en cas de défaillance, les projecteurs restent dans leur position de réglage ou basculent vers le bas. Il peut prévoir un moyen d'avertissement visuel, du type diode électroluminescente, ou sonore, au niveau de l'actionneur ou du projecteur et/ou du tableau de bord du véhicule quand le mode de gestion des défaillances est activé.

Un déplacement vers le haut n'est pas autorisé, pour éviter le risque d'éblouissement pour les véhicules circulant en sens contraire. L'information "défaillance" est disponible par exemple soit sur une des entrées de l'actionneur, soit sur l'actionneur lui-même par un voyant (rouge) ou soit sur les deux.

L'invention sera détaillée ci-après avec des exemples non limitatifs, à l'aide des figures suivantes :

- **fig.1 :** une représentation schématique d'un véhicule muni du dispositif de réglage selon l'invention
- **fig. 2 :** une représentation d'un actionneur avec une première variante électronique de type analogique selon l'invention
- **fig. 3 à 7 :** des représentations d'un actionneur avec différentes variantes d'électronique de type analogique selon l'invention
- **fig. 8** : un schéma récapitulatif d'un système électronique selon l'invention
- **fig.9 :** un exemple d'électronique analogique gérant un mode de défaillance et d'alerte
- **fig.10a-10b** : un exemple d'implantation de l'électronique dans un actionneur selon l'invention

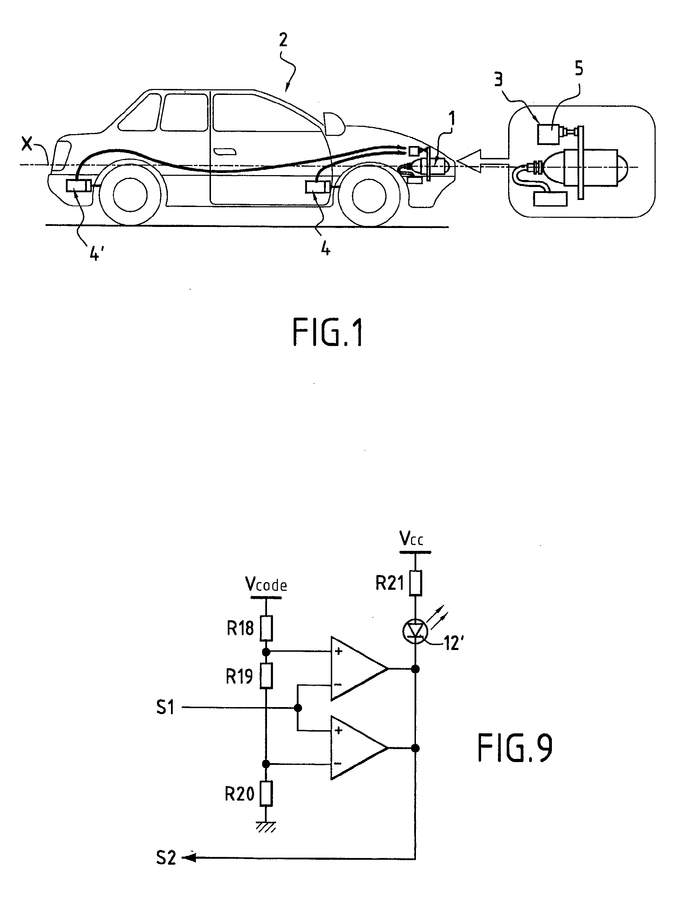

La figure 1 représente un véhicule 2 équipé de deux projecteurs 1,1', d'un capteur avant 4 et d'un capteur arrière 4' fixés sur le châssis du véhicule 2. A chaque projecteur 1, l'est associé un actionneur 3,3'. L'électronique de commande 5, 5' des actionneurs est implantée dans ces derniers : soit une électronique de commande par actionneur, soit une électronique dans un des actionneurs qui « pilote » les deux actionneurs. On a donc un système de réglage plus compact qu'auparavant, où l'électronique se trouvait par exemple montée sur le châssis du véhicule ou au niveau du tableau de bord.

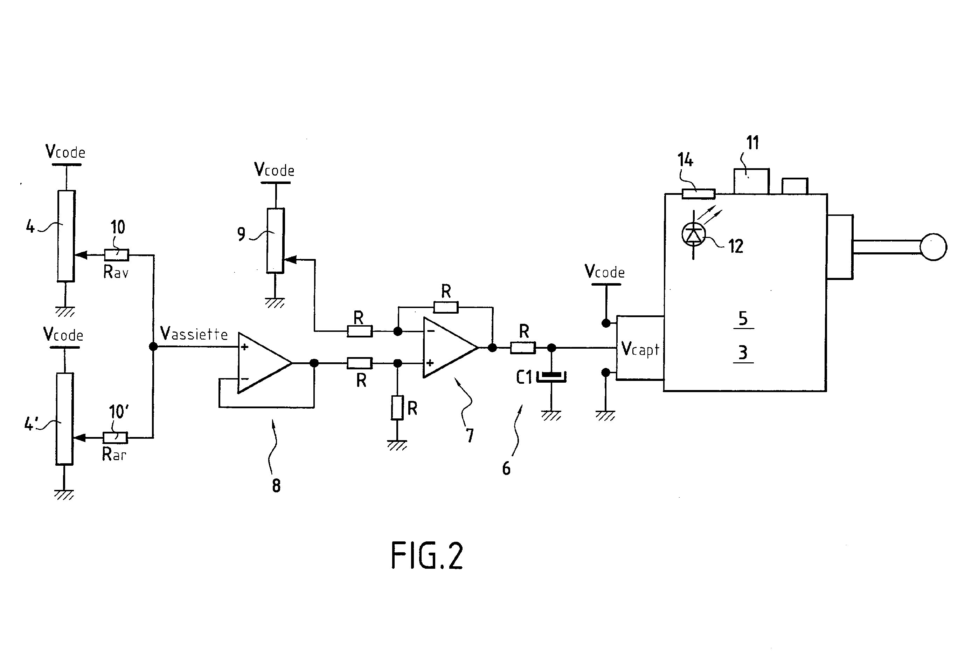

La figure 2 décrit un exemple de circuit électronique entièrement analogique selon l'invention, appliquant la loi de correction adaptée par les inventeurs et décrite plus haut (équation (ii)). Ce circuit comprend un potentiomètre 9, un suiveur 8, un soustracteur 7, un intégrateur 6. Le circuit comprend également deux résistances 10, 10' qui peuvent être intégrées avec les autres composants du circuit dans l'actionneur 5. Ces deux résistances, comme décrit plus loin, peuvent alternativement être sur le faisceau électrique du véhicule. L'actionneur 5 représenté très schématiquement à cette figure intègre donc cette électronique, à l'exception éventuellement des résistances 10, 10'. On voit sur l'actionneur deux boutons de réglage, dont le bouton 11 du zéro électrique des capteurs 4, 4' détaillé plus loin, une diode électroluminescente 12 sous une fenêtre transparente disposée sur le boîtier de l'actionneur, et un bouton de réglage représenté sur la partie latérale du boîtier de l'actionneur, qui, de manière connue, sert au réglage manuel de la position horizontale des projecteurs.

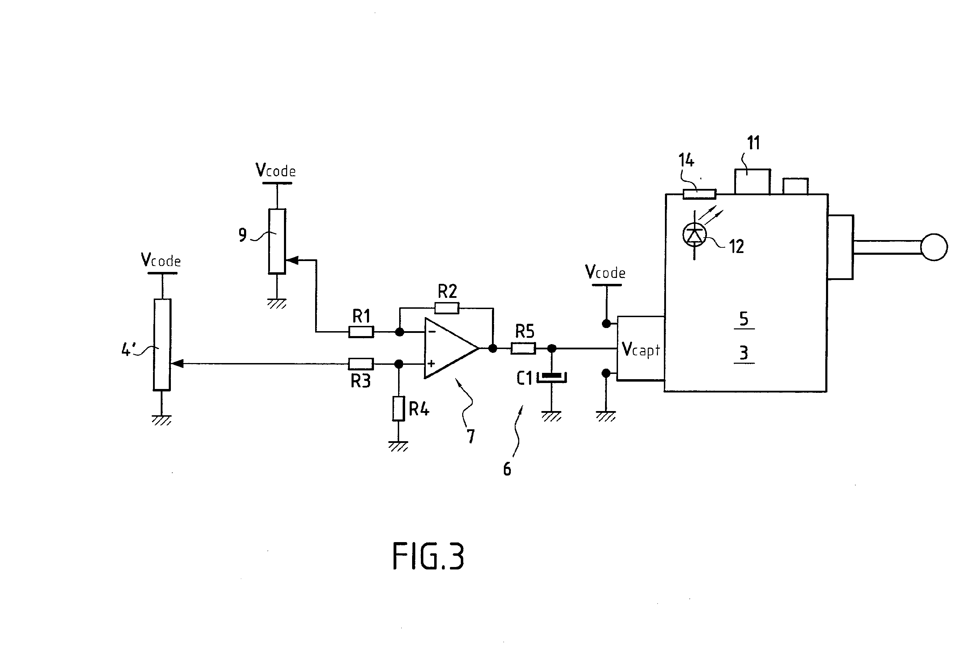

Les figures 3 à 7 sont différentes variantes de l'électronique 5 :

- la figure 3 montre le réglage potentiométrique permettant de repositionner la tension de commande du moteur de l'actionneur dans sa plage nominale.

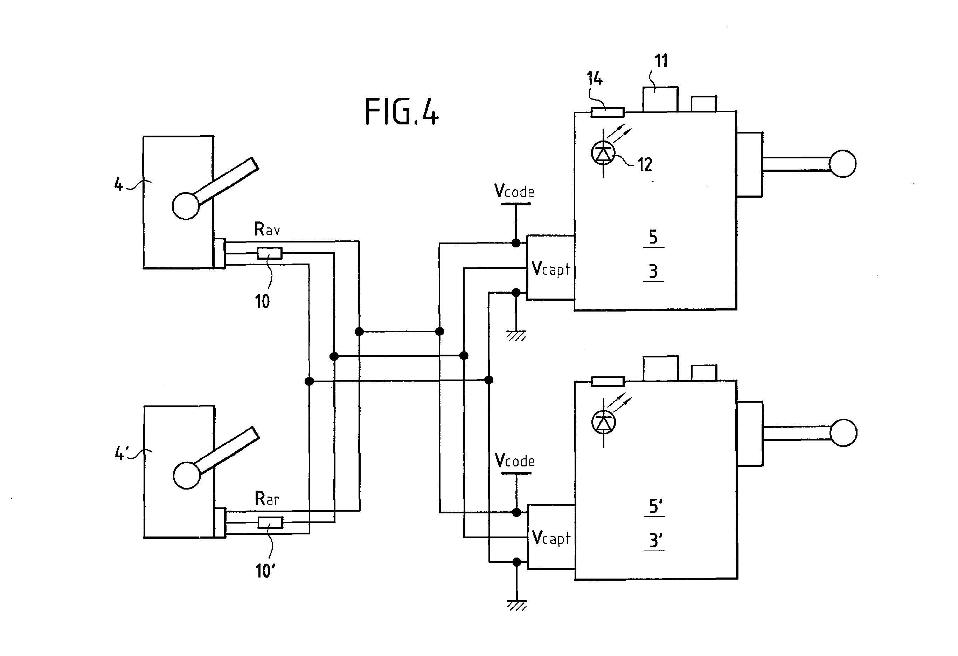

- Les figures 4 à 7 montrent différentes implantations de l'électronique :

  • figure 4 : le réglage du zéro électrique des capteurs sert à rattraper les erreurs de position des capteurs sur véhicule, l'intervention se faisant sur le bouton de réglage 11 en fin de chaîne chez le constructeur, les résistances 10, 10' étant intégrées dans le faisceau du véhicule

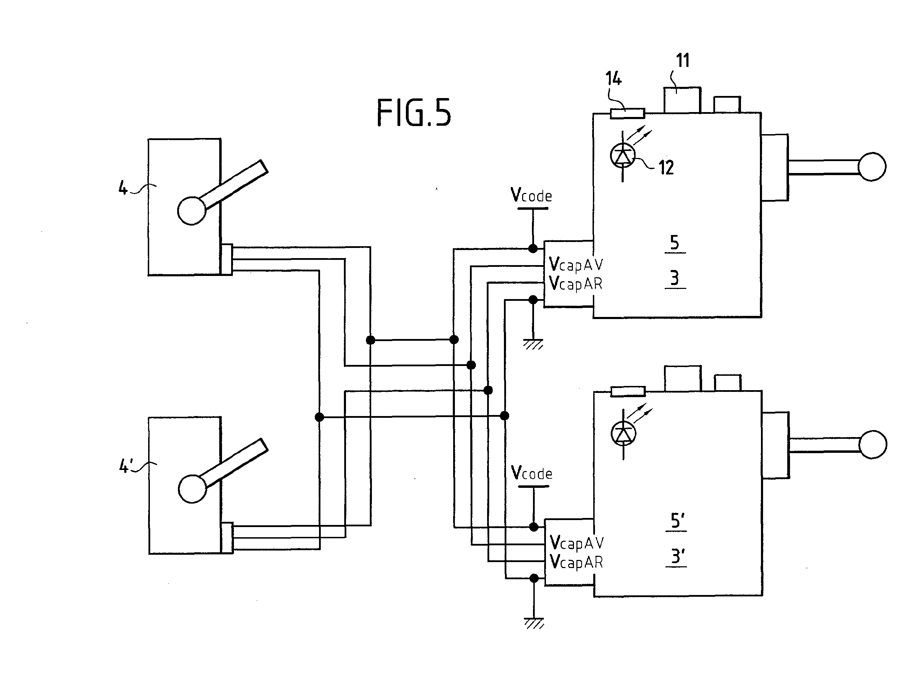

- figure 5 : le réglage du zéro électrique se fait comme à la figure précédente, le connecteur a quatre fils. On a ici une électronique 5, 5' par actionneur 3,3', une par projecteur donc, et les deux résistances 10, 10' sont intégrées au reste de l'électronique 5 et 5' respectivement.

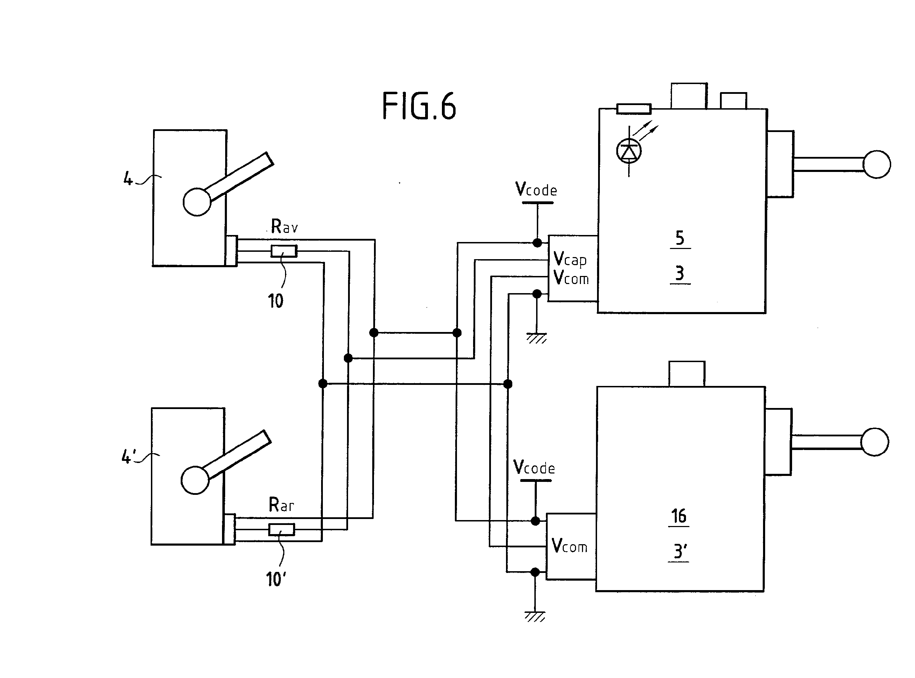

- figure 6 : on a ici une autre variante avec une électronique (« maître ») 5 selon l'invention pour un des actionneurs à cinq fils et une électronique simplifiée (« esclave ») 16 pour l'autre actionneur, qui, elle, est connue en soi. C'est une solution économiquement avantageuse. On a en outre les deux résistances 10, 10' hors de l'actionneur 3 : l'avantage de cette solution est que, d'un modèle de véhicule à un autre, on peut garder la carte électronique supportant le système électronique identique, dans l'actionneur, et il n'y a que ces résistances à adapter/ajuster.

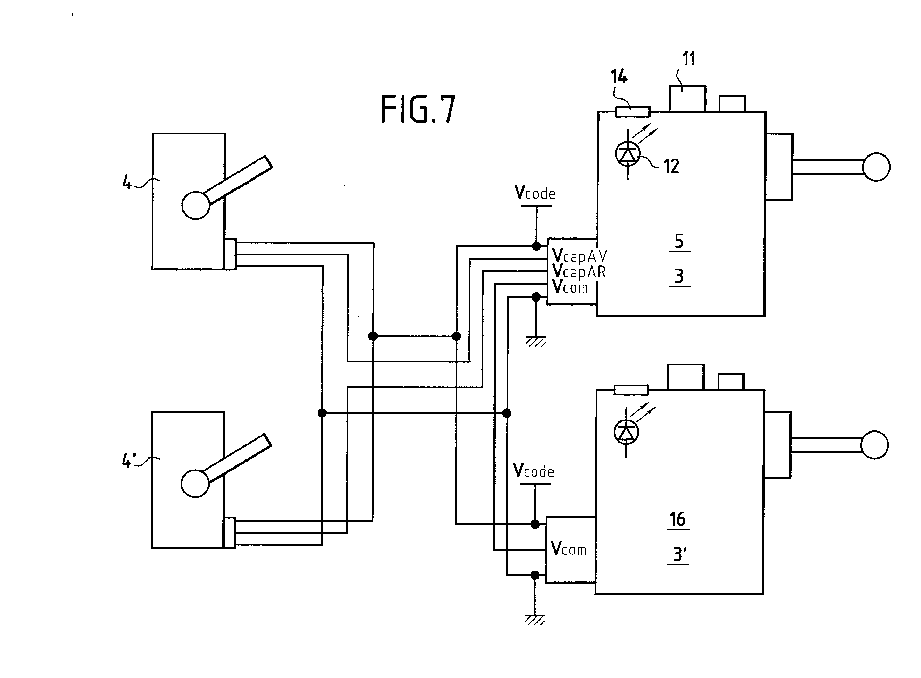

- figure 7 : On est dans la même configuration qu'à la figure 6, avec une électronique maître 5 dans un actionneur 3 et une électronique simplifiée 16 dans l'autre actionneur 3'. Ici, on a disposé les deux résistances électriques 10, 10' avec le reste de l'électronique « maître" 5 dans l'actionneur 3. L'avantage de cette solution est d'avoir ainsi une intégration totale du circuit électronique : on peut tout intégrer dans le boîtier de l'actionneur.

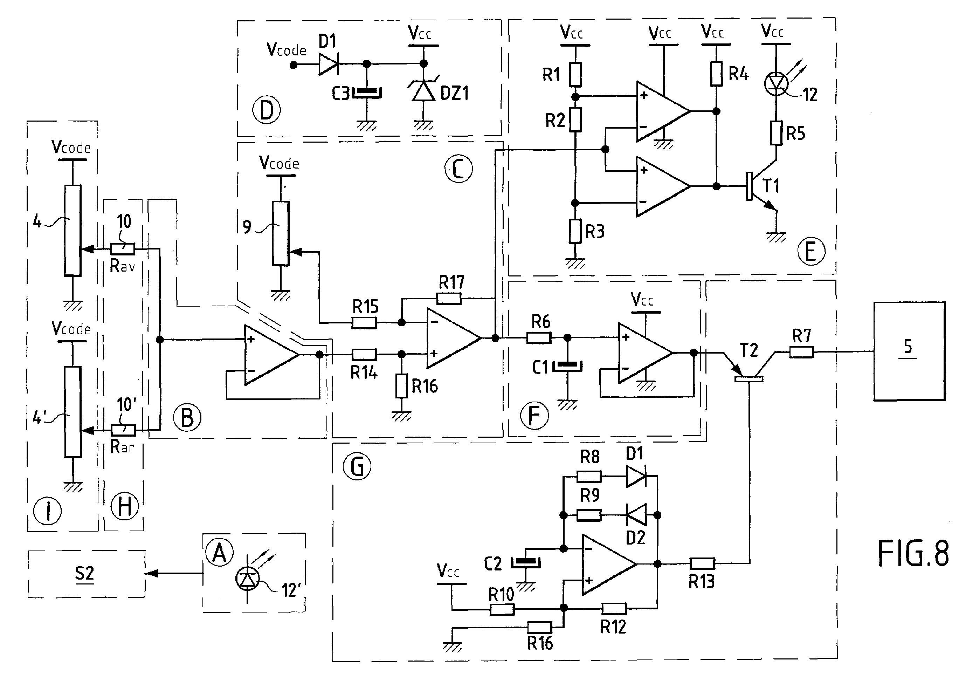

La figure 8 récapitule le schéma de principe de l'électronique 5. On y voit :

- le bloc A de gestion du mode de défaillance, avec une diode électroluminescente 12' d'alerte du passage en mode défaillant
- le bloc B de moyenne pondérée des capteurs
- le bloc C, qui est un sommateur
- le bloc D, qui est un système de protection des surtensions
- le bloc E, qui est un comparateur à fenêtre
- le bloc F, qui est un système de filtrage
- le bloc G qui est un générateur d'impulsion
- le bloc H qui représente les deux résistances 10, 10' déjà décrites
- le bloc 1 , qui représente les capteurs 4, 4'

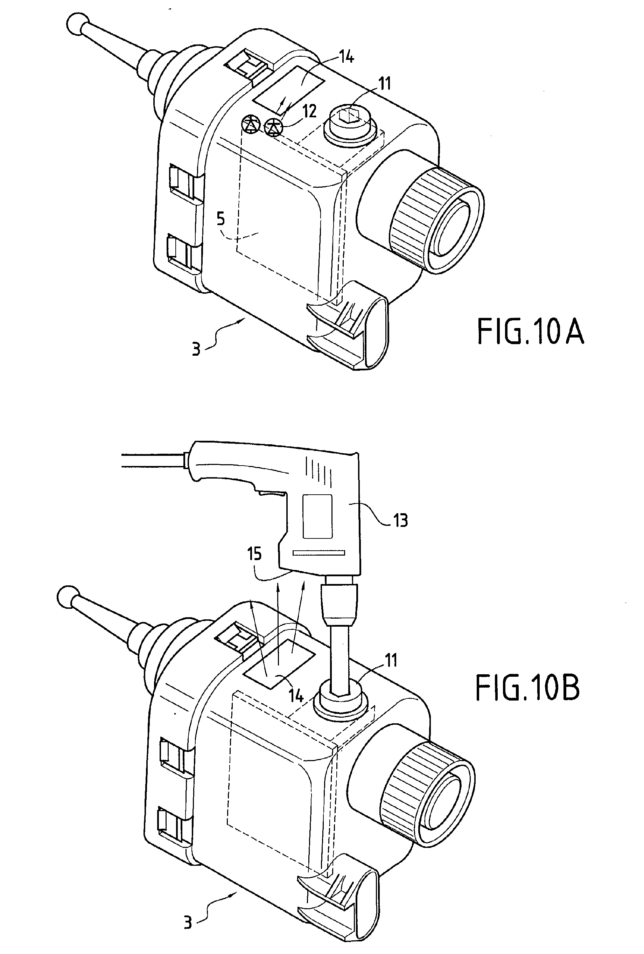

La figure 9 détaille le mode de gestion des défaillances représenté par le bloc A à la figure 8. S1 représente le signal du capteur, et S2 le signal du défaut. La diode 12' peut être placée sur l'actionneur et/ou sur le tableau de bord.

La figure 10a montre un actionneur 3, qui est muni d'un boîtier à l'intérieur duquel est intégrée l'essentiel de l'électronique de commande 5, sous forme d'une carte électronique (à l'intérieur du boîtier, en pointillés sur la figure). On peut voir une fenêtre transparente 14, par exemple en polycarbonate, qui est surmoulée sur le boîtier et qui protège une diode électroluminescente 12. On y voit aussi un bouton de réglage 11 du zéro électrique des capteurs, et un bouton de réglage manuel disposé latéralement sur le boîtier de l'actionneur, qui permet de régler la position horizontale du projecteur. Bien sûr, les deux boutons de réglage mentionnés peuvent être chacun ajustés manuellement ou automatiquement. La figure 10b montre ainsi un réglage automatique du bouton de réglage 11, dont le fonctionnement est le suivant : Sur chaîne de production, le réglage lors de l'initialisation peut être rendu automatique en utilisant une visseuse 13 dont la tête est équipée d'un capteur optique 15. Lors de l'opération de réglage, la visseuse automatique 13 s'arrête dès que le signal issu du dispositif des comparateurs est détecté. Ce signal peut être optique s'il provient d'une diode électroluminescente 12 implantée dans l'actionneur 3 ou électrique s'il est généré sur une des entrées de l'actionneur.

L'invention concerne aussi ces différentes électroniques de commande en mode analogique quand elles sont implantées, au moins partiellement, hors de l'actionneur.

En conclusion, l'invention, qu'elle adopte une électronique de commande analogique ou numérique, a su trouver une implantation de l'électronique compacte et fiable. Par ailleurs, la variante où l'électronique de commande est de type analogique est particulièrement intéressante, qu'elle soit ou non implantée dans l'actionneur, pour les raisons suivantes : La correction d'assiette est réalisée de manière analogique, autonome, simple et sans microcontrôleur. Le dispositif électronique de correction peut être intégré dans un ou les deux actionneurs. (Il peut être cependant installé dans tout autre endroit du véhicule comme la molette au tableau de bord). L'obtention de la loi de correction peut être obtenue de manière simple à l'aide de deux résistances et en inversant judicieusement les alimentations des deux capteurs, ce qui réduit le nombre de composants électroniques. En outre, ce type de montage peut être utilisé dans les étages de tête d'une correction utilisant un microcontrôleur. Il s'en suit une baisse du coût de la fonction et une amélioration de la précision de la correction. Lors de l'initialisation, le dispositif de réglage des commandes des moteurs dans leur plage nominale peut être réalisé par un dispositif comparateur qui déclenche l'émission d'une diode électroluminescente ou qui délivre un signal électrique. Le dispositif peut comprendre un échantillonnage de la valeur de consigne, ce qui permet d'éviter les fluctuations de tension. Le dispositif est conçu de manière à être facilement réglé sur la chaîne de production à l'aide d'un outil automatique qui détecte le niveau de réglage. Le dispositif est capable de rabattre les projecteurs et d'émettre un signal en mode défaillant.

**Revendications**

1. Dispositif de réglage automatique de la position d'au moins un projecteur (1, 1') de véhicule automobile (2) par rapport à la carrosserie par pivotement autour d'au moins un axe (X) sensiblement parallèle au chemin de roulement, ledit dispositif comprenant au moins un actionneur (3, 3') apte à faire pivoter ledit (lesdits) projecteur(s) (1), au moins un capteur (4, 4') solidaire du véhicule (2), et notamment fixé au châssis à proximité d'une des roues du véhicule, au moins un système électronique de commande (5, 5') de l'actionneur (3) à l'aide des informations provenant du(des) capteur(s) (4, 4'), **caractérisé en ce que** ledit système électronique de commande (5), ou tout au moins l'essentiel de ses composants, est fixé à ou implanté dans l'actionneur (3).

2. Dispositif selon la revendication 1, **caractérisé en ce qu'**il comprend au moins deux capteurs (4, 4') dont un à l'avant du véhicule (2) et un à l'arrière du véhicule.

3. Dispositif selon l'une des revendications précédentes, **caractérisé en ce qu'**il comprend un seul système électronique de commande (5) pour régler les deux projecteurs (1, 1') du véhicule (2), avec un actionneur (3, 3') par projecteur, ledit système (5) étant associé à l'un des deux actionneurs.

4. Dispositif selon la revendication précédente **caractérisé en ce qu'**il comprend le système électronique (5) maître fixé à ou implanté dans un actionneur (3), et une électronique simplifiée esclave dans l'autre actionneur (3').

5. Dispositif selon la revendication 1 ou la revendication 2, **caractérisé en ce qu'**il comprend un système électronique de commande (5, 5') associé à un actionneur (3, 3') par projecteur (1, 1').

6. Dispositif selon l'une des revendications précédentes, **caractérisé en ce que** le(s) système(s) électronique(s) de commande (5, 5') est (sont) amovible(s) par rapport à l'actionneur auquel il(s) est (sont) fixé(s) ou dans lequel il (s) est (sont) implanté(s).

7. Dispositif selon l'une des revendications précédentes, **caractérisé en ce que** le système électronique (5) est sous forme d'une carte électronique

8. Dispositif selon l'une des revendications précédentes, **caractérisé en ce que** le(s) système(s) électronique(s) de commande (5, 5') est (sont) de type numérique.

9. Dispositif selon la revendication 8, **caractérisé en ce que** le(s) système(s) électronique(s) de commande (5, 5') comprend (comprennent) un calculateur.

10. Dispositif selon l'une des revendications 1 à 7, **caractérisé en ce que** le(s) système(s) électronique(s) de commande (5, 5') est (sont) de type analogique.

11. Dispositif selon la revendication 10, **caractérisé en ce que** le(s) système(s) électronique(s) de commande (5, 5') comprend (comprennent) au moins un intégrateur (6), au moins un soustracteur (7), au moins un suiveur (8).

12. Dispositif selon la revendication 10 ou 11, **caractérisé en ce que** le(s) système(s) électronique(s) de commande (5, 5') comprend (comprennent) un bloc (A) de gestion des défaillances, un bloc (B) de calcul de moyenne pondérée des capteurs, un bloc (C) qui est un sommateur, un bloc (D) qui est un système de protection des surtensions, un bloc (E) qui est un comparateur à fenêtre, un bloc (F) qui est un système de filtrage, un bloc (G) qui est un système générateur d'impulsions, un bloc (H) qui est un ensemble d'au moins deux résistances.

13. Dispositif selon l'une des revendications 10 à 12, **caractérisé en ce que** le(s) système(s) électronique(s) de commande (5, 5') comprend (comprennent) au moins un potentiomètre (9).

14. Dispositif selon l'une des revendications 10 à 13, **caractérisé en ce que** le(s) système(s) électronique(s) de commande (5, 5') comprend (comprennent) des résistances (10, 10', notamment deux, qui sont disposés en dehors du (des) actionneurs (3, 3'), sur le faisceau électrique du véhicule (2) ou au niveau des capteurs (4, 4').

**15.** Dispositif selon l'une des revendications précédentes, **caractérisé en ce qu'**il est muni de moyens d'initialisation destinés à régler le moteur de l'actionneur (3, 3') à sa position nominale, lesdits moyens comprenant un moyen de réglage (11) accessible de l'extérieur du boîtier de l'actionneur et associé à un moyen d'avertissement (12), notamment visuel ou sonore ou électrique, de l'état d'avancement de l'initialisation.

**16.** Dispositif selon la revendication 15, **caractérisé en ce que** le moyen d'avertissement (12) est une source lumineuse du type diode électroluminescente.

**17.** Dispositif selon la revendication 16, **caractérisé en ce que** la source lumineuse (12) est intégrée dans le boîtier de l'actionneur (3, 3') et protégée par un écran transparent (14), notamment sous forme d'une pièce transparente surmoulée sur ledit boîtier.

**18.** Dispositif selon l'une des revendications 15 à 17, **caractérisé en ce que** le moyen de réglage (11) est ajustable automatiquement par un outil (13) de type visseuse, ledit outil répondant à un système de commande de marche arrêt utilisant un capteur (15), notamment un capteur optique disposé sur ledit outil, apte à détecter le signal d'avertissement de fin de réglage du moyen d'avertissement (12).

**19.** Dispositif selon l'une des revendications précédentes, **caractérisé en ce qu'**il a un mode de fonctionnement séquentiel.

**20.** Dispositif selon l'une des revendications précédentes, **caractérisé en ce qu'**il comprend un mode de gestion des défaillances commandant à l'actionneur de rabattre le(s) projecteur(s) (1, 1') vers le bas.

**21.** Dispositif selon la revendication 20, **caractérisé en ce qu'**il prévoit un moyen d'avertissement visuel, du type diode électroluminescente, ou sonore, au niveau de l'actionneur (3, 3') ou du projecteur et/ou du tableau (1, 1') de bord du véhicule quand le mode de gestion des défaillances est activé.

**22.** Véhicule automobile **caractérisé en ce qu'il** est muni du dispositif de réglage selon l'une au moins des revendications précédentes.

EP 1 388 460 A2

FIG.1

FIG.9

FIG.2

EP 1 388 460 A2

FIG.3

FIG.4

EP 1 388 460 A2

FIG.5

FIG.6

FIG.7

FIG.8

EP 1 388 460 A2

16

FIG.10 A

FIG.10 B